# EUROPÄISCHE PATENTSCHRIFT

(11) **EP 1 618 251 B1**
(45) Veröffentlichungstag und Bekanntmachung des Hinweises auf die Patenterteilung: **31.03.2010**
(21) Anmeldenummer: 04729085.3
(22) Anmeldetag: 23.04.2004
(51) Int. Cl.: D21G 1/02, F16C 13/00

(54) **WALZE FÜR DIE DRUCKBEHANDLUNG VON WARENBAHNEN**
ROLL FOR PRESSURE TREATMENT OF MATERIAL BANDS
CYLINDRE DESTINE AU TRAITEMENT DE COMPRESSION DE BANDES DE MATERIAU

(30) Priorität: 30.04.2003 DE 10319345
(43) Veröffentlichungstag der Anmeldung: 25.01.2006
(73) Patentinhaber: Andritz Küsters GmbH, 47805 Krefeld (DE)
(72) Erfinder: HADER, Peter, 47906 Kempen (DE); MEITNER, Robert, 47829 Krefeld (DE)
(74) Vertreter: Kluin, Jörg-Eden
(86) Internationale Anmeldenummer: PCT/EP2004/004320
(87) Internationale Veröffentlichungsnummer: WO 2004/097110

(56) Entgegenhaltungen:
- WO-A-88/03610
- DE-A- 4 318 035
- US-A- 5 730 692

## Beschreibung

Die Erfindung betrifft eine Walze für die Druckbehandlung von Warenbahnen der dem Oberbegriff des Anspruchs 1 entsprechenden Art. Eine derartige Walze ist aus der DE 43 18 035 A1 bekannt.

Derartige Walzen werden auch als "schwimmende" Walzen bezeichnet. Sie umfassen einen meist drehfest gelagerten Träger, um den ein den Walzenumfang bildender Walzenmantel drehbar gelagert ist. Zwischen dem Walzenmantel und dem Träger ist mindestens eine Druckkammer ausgebildet, die mit einer Flüssigkeit gefüllt ist, welche eine hydraulische Stützkraft auf den Walzenmantel übertragen kann, die radikal in Richtung des Walzenspaltes ausgerichtet ist.

Eine derartige Walze ist auch aus der DE-AS 1 026 609 bekannt. Sie weist zur Verhinderung unzulässiger Drucksteigerungen in dem Träger eine Mehrzahl von sich von unten nach oben erstreckender Sacklochbohrungen auf, die oberhalb einer Druckflüssigkeitssäule ein Luftpolster enthalten.

Aus der WO 88/03610 ist es bekannt, in der Druckkammer einer schwimmenden Walze eine zweite Kammer vorzusehen, die über eine Drosselstelle mit der ersten Kammer verbunden ist. In der zweiten Kammer befindet sich ein gasgefüllter, hermetisch verschlossener Gummischlauch. Die zweite Kammer ist somit stets nur teilweise mit Flüssigkeit gefüllt. Auf Grund dieser Maßnahme kann sich bei einer Druckänderung in der ersten Kammer das in der zweiten Kammer befindliche Flüssigkeitsvolumen ändern. Ein Vibrieren des Walzenmantels führt demnach zu einer oszillierenden Flüssigkeitsströmung durch die Drosselstelle, so daß durch Flüssigkeitsreibung Schwingungsenergie in Reibungswärme umgesetzt wird.

Die DE 31 51 001 A1 betrifft eine hydrostatisch gelagerte Walze, bei der der Walzenmantel über hydrostatische Lagerelemente an dem Träger abgestützt ist. Die Lagertaschen der hydrostatischen Elemente sind zur Schwingungsdämpfung mit einem externen, elastisch wirkenden Druckspeicher verbunden.

Derartige Walzen haben sich zur Druckbehandlung von Warenbahnen, beispielsweise zum Glätten und Prägen von Papier und anderen Werkstoffen, zum Abquetschen der Feuchtigkeit von Textilien, zum Kalandrieren und Ausziehen von Kunststoff- und Gummifolien sowie für andere Preßvorgänge bewährt. Es hat sich jedoch gezeigt, daß insbesondere dann, wenn die schwimmende Walze mit einem elastischen Bezug - beispielsweise aus Kunststoff - versehen ist, sich nach einer unerwünscht kurzen Betriebsdauer über den Umfang des Bezuges der Walze sich ein Vieleck ausbildet. Die Ausbildung dieses Vielecks erklärt sich durch Schwingungszustände, bei denen die Walze gegen das den Walzenspalt begrenzende Gegenwerkzeug - meist eine Gegenwalze - schwingt.

Es ist daher die Aufgabe der Erfindung, eine gattungsgemäße Walze derart weiterzubilden, daß auf konstruktiv einfache Weise eine wirksame Schwingungsentkopplung des Walzenmantels von dem Träger bewirkt wird, um so den schwingungsbedingten Verschleiß durch Reduzierung der gegen das Gegenwerkzeug schwingenden Masse zu verringern.

Diese Aufgabe wird durch die in Anspruch 1 wiedergegebene Walze gelöst.

Dadurch, daß in der zumindest einen Druckkammer ein elastisches Element vorgesehen ist, das drosselfrei mit der die hydraulische Stützkraft bewirkenden Stützflüssigkeit in Verbindung steht und das bei Überschreitung des zur Erzeugung der hydraulischen Stützkraft erforderlichen Flüssigkeitsdrucks komprimierbar ist, werden durch eine Schwingung des Trägers bedingte Druckspitzen in dem Walzenspalt zumindest im Wesentlichen vermieden. Die drosselfreie Verbindung von dem elastischen Element und der Druckflüssigkeit führt dazu, daß auch Schwingungen des Trägers mit großer Amplitude nicht oder nur geringfügig auf den Walzenmantel übertragen werden.

Versuche haben gezeigt, daß bei einer erfindungsgemäß weitergebildeten, schwimmenden Walze der Verschleiß, dem der Bezug des Walzenmantels unterliegt, gegenüber solchen, nach dem Stand der Technik ausgebildeten Walzen wesentlich reduziert ist und der Walzenmantel vor einer Instandsetzung oder Erneuerung erheblich länger verwendbar ist.

Neben der Druckkammer, in der sich die Flüssigkeit, die die hydraulische Stützkraft bewirkt, befindet, kann die Walze eine Leckkammer umfassen, die der Aufnahme und Abfuhr von aus der Druckkammer austretender Hydraulikflüssigkeit dient. Mindestens ein weiteres elastisches Element kann dann zur Verbesserung der Entkopplung von Walzenmantel und Träger zusätzlich in der Leckkammer vorgesehen sein.

Das mindestens eine elastische Element weist vorzugsweise eine mit einem komprimierbaren Medium versehene oder versehbare Hohlkammer auf.

Bei einer bevorzugten konstruktiven Variante ist das elastische Element schlauchförmig ausgebildet.

Das komprimierbare Medium ist vorzugsweise Luft.

Bei einer ersten möglichen Ausführungsform ist das elastische Element geschlossen ausgebildet und mit einem vorbestimmten Druck gefüllt. Dieser Druck liegt dann unter dem niedrigsten zu erwartenden Druck, unter dem die hydraulische Stützflüssigkeit steht. Bei der Benutzung der Walze wird das elastische Element dann soweit komprimiert, daß sich ein Gleichgewicht zwischen dem Stützflüssigkeitdruck und dem pneumatischen Druck in dem elastischen Element einstellt.

Versuche haben gezeigt, daß sich die Füllung des elastischen Elements mit Atmosphärendruck für eine Vielzahl von Anwendungen eignet.

Um jedoch den Druckbereich, für den die erfindungsgemäße Walze einsetzbar ist, zu erweitern, ist es bevorzugt, wenn das elastische Element ein Einwegventil umfaßt, über das es mit Luft unter einem Druck befüllbar ist, der wiederum niedriger als der Druck ist, unter dem die hydraulische Stützflüssigkeit im Betrieb der Walze steht. Der Druck in dem elastischen Element kann dann optimal an die jeweils zu erwartenden Druckverhältnisse in der Druck- und ggf. Leckkammer angepaßt werden.

Ein Nachteil der Ausführungsform der erfindungsgemäßen Walze mit geschlossenem elastischen Element ist, daß letztere ein möglichst großes Innenvolumen aufweisen müssen, damit die Walze für einen möglichst großen Druckbereich im Walzenspalt geeignet ist. Denn nur bei einem Mindestausgangsvolumen ist gewährleistet, daß das Luftvolumen auch bei dem höchsten, gewünschten Betriebsdruck ein ausreichendes Luftvolumen zur Kompensation von Schwingungen des Trägers aufweist. Ein großes Ausgangsvolumen des elastischen Elements erfordert jedoch einen entsprechend großen Freiraum in der Druck- bzw. Leckkammer, was zu einer unerwünschten Schwächung des Trägers und einer damit einhergehenden Erhöhung der Schwingungsneigung bzw. Vergrößerung der Schwingungsamplitude führt.

Besonders bevorzugt ist daher eine Ausführungsform der erfindungsgemäßen Walze, bei der das mindestens eine elastische Element mit einer Druckluftquelle verbunden ist, über die der Druck so nachfahrbar ist, daß er stets geringfügig höher als der Druck ist, unter dem die hydraulische Stützflüssigkeit steht. Bei dieser Ausführungsform wird mit anderen Worten der pneumatische Druck in dem elastischen Element - d.h. dessen Nachgiebigkeit - an den jeweils aktuellen hydraulischen Druck, unter dem die Stützflüssigkeit steht, angepaßt.

Um zu verhindern, daß die elastischen Elemente kollabieren, können sie mit Mitteln zur inneren Abstützung, beispielsweise einer Spiralwendel aus einem elastisch verformbaren Material, ausgerüstet sein.

Zur Aufnahme des mindestens einen elastischen Elements ist vorzugsweise eine in den Träger eingearbeitete Ausnehmung vorgesehen. Insbesondere dann, wenn die elastischen Elemente schlauchförmig ausgebildet sind, weist sie vorzugsweise die Form einer achsparallel verlaufenden Längsnut auf.

Besonders bevorzugt ist eine Ausführungsform der erfindungsgemäßen Walze, die Mittel zur Ermittlung des hydraulischen Drucks, unter dem die Stützflüssigkeit steht, umfaßt. Diese Mittel können einen Drucksensor umfassen, der vorzugsweise außerhalb der Walze angeordnet ist, jedoch mit der Druckkammer fluidisch in Verbindung steht.

Der Drucksensor dient bei einer besonders bevorzugten Ausführungsform der erfindungsgemäßen Walze zur Steuerung oder Regelung des pneumatischen Drucks, mit dem das mindestens eine elastische Element beaufschlagt wird.

In der Zeichnung ist - schematisch - ein Ausführungsbeispiel der erfindungsgemäßen Walze dargestellt. Es zeigen:
- Fig. 1: die Walze in einem Querschnitt;

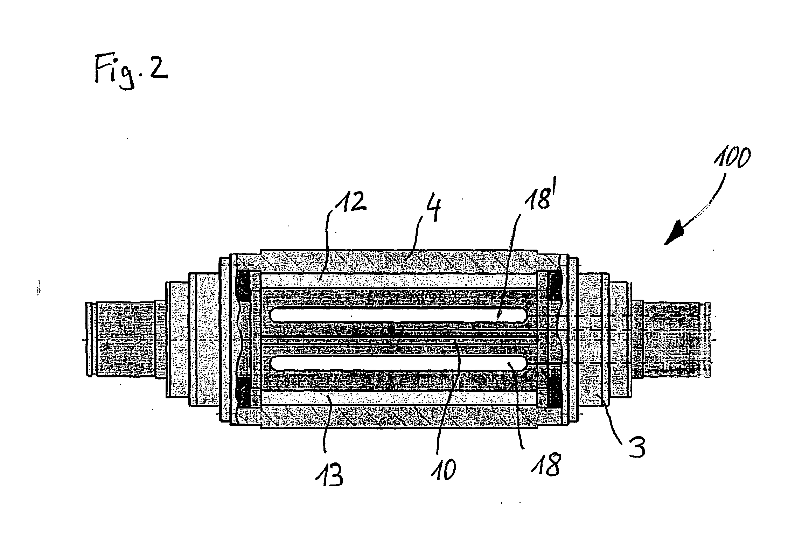

- Fig. 2 sowie: die selbe Walze in einer teilgeschnittenen Längsansicht
- Fig. 3 Walze.: die hydraulische und pneumatische Beschaltung dieser

Die als ganzes mit 100 bezeichnete Walze ist als sogenannte schwimmende Walze ausgestaltet. Sie bildet mit einer Gegenwalze 1 einen Walzenspalt 2 zur Druckbehandlung einer kontinuierlich vorlaufenden, in der Zeichnung nicht dargestellten Warenbahn. Die Gegenwalze 1 kann als konventionelle, als durchbiegegesteuerte, als schwimmende Walze oder in beliebiger anderer Weise ausgestaltet sein.

Die erfindungsgemäße Walze 100 umfaßt einen Träger 3, der an einem in der Zeichnung nicht dargestellten Maschinengestell drehfest gelagert ist. Rotierbar um den Träger 3 gelagert ist ein Walzenmantel 4, dessen äußere Mantelfläche 5 den Arbeitsumfang 6 der Walze 100 bildet.

Zwischen der inneren Mantelfläche 7 des Walzenmantels 4 und der äußeren Mantelfläche 8 des Trägers 3 befindet sich ein Ringspalt 9, der durch zwei einander gegenüberliegende Längsdichtungsanordnungen 10, 11 in eine der Gegenwalze 1 zugewandte Druckkammer 12 und in eine der Gegenwalze 1 abgewandte Leckkammer 13 unterteilt ist.

Die Druckkammer 12 enthält während des Betriebs der Walze 100 unter einem hydraulischen Druck stehende Stützflüssigkeit, deren Druck die in dem Walzenspalt 2 herrschende Linienkraft bestimmt.

Die Leckkammer 13 dient der Aufnahme und Abfuhr von Stützflüssigkeit, die an den Längsdichtungsanordnungen 10, 11 vorbei in die Leckkammer eindringt.

In den Träger 3 sind über dessen Umfang verteilt vier Längsnuten 14, 15, 16, 17 eingearbeitet, die der Aufnahme jeweils eines elastischen Elements 18, 18' dienen, das drosselfrei mit der Stützflüssigkeit in Verbindung steht und dessen konstruktiver Aufbau und dessen Wirkungsweise im Weiteren noch beschrieben werden soll.

Die elastischen Elemente 18, 18' sind schlauchförmig ausgebildet. Sie umfassen jeweils eine Außenhülle 19 aus einem elastischen Material sowie im Innenvolumen der Außenhülle 19 angeordnete Abstützmittel 20, die ein Kollabieren der Außenhülle 19 auch bei höheren Drücken des hydraulischen Stützmittels verhindern.

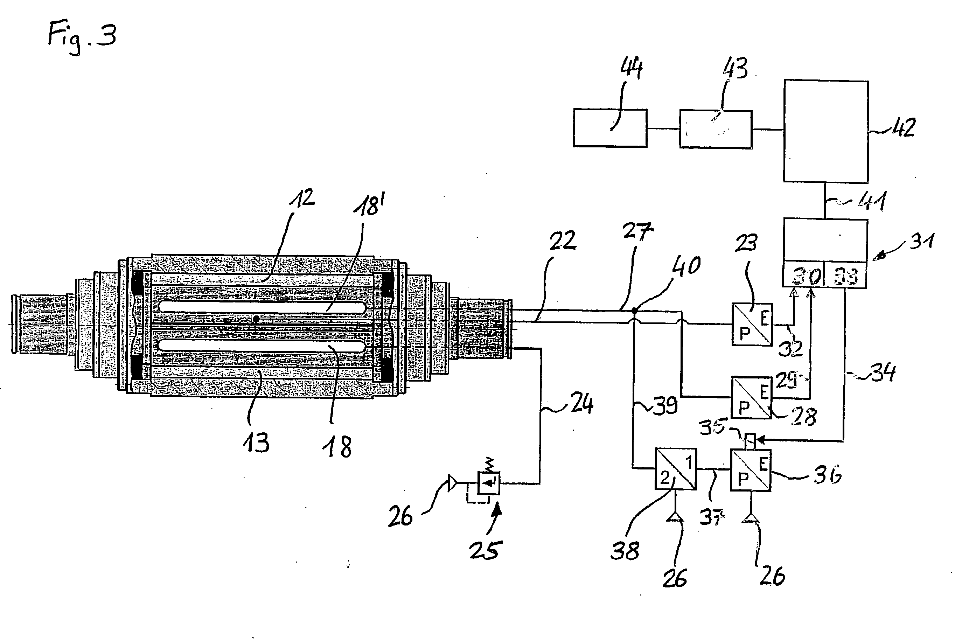

Im Innenvolumen 21 eines elastischen Elements 18, 18' herrscht ein pneumatischer Druck, dessen Höhe in Abhängigkeit der Höhe des hydraulischen Druckes, unter dem die Stützflüssigkeit steht, in einer an Hand von Fig. 3 weiter unten beschriebenen Weise geregelt wird. Zur Ermittlung des aktuell in der Druckkammer 12 herrschenden Hydraulikdruckes ist eine Meßleitung 22 vorgesehen, die die Druckkammer 12 mit einem außerhalb der Walze 100 positionierten Druck/Elektro-Wandler 23 (siehe Fig. 3) verbindet.

Die hydraulische und pneumatische Beschaltung der erfindungsgemäßen Walze 100 soll nun an Hand von Fig. 3 beschrieben werden.

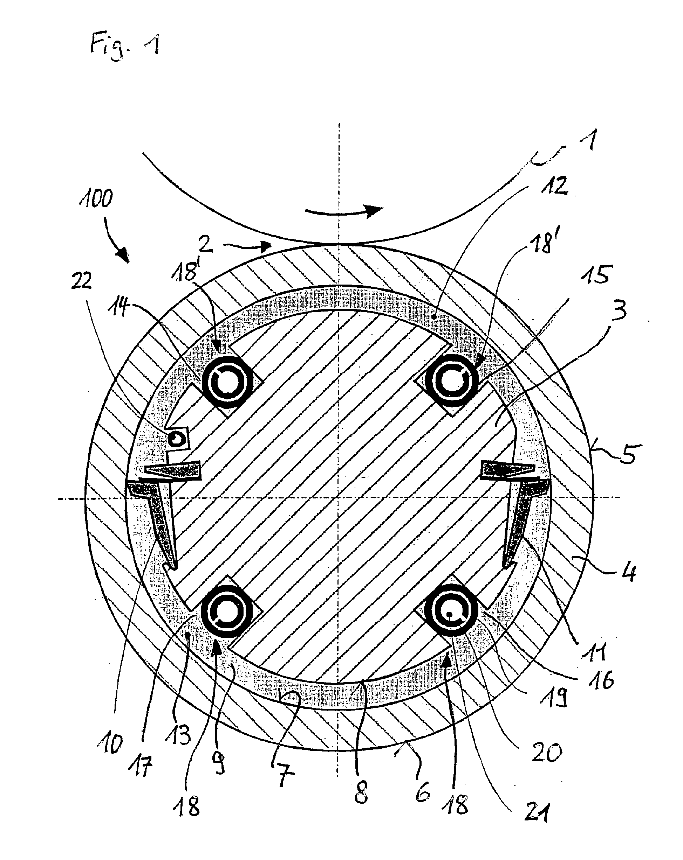

Die mit der Leckkammer 13 in Verbindung stehenden, in Fig. 1 unten dargestellten elastischen Elemente 18 sind über eine Pneumatikleitung 24 über einen Druckminderer 25 an eine zentrale Luftdruckquelle 26 angeschlossen. Es versteht sich, daß anstatt einer einzelnen Pneumatikleitung 24, die dann über einen in der Zeichnung nicht dargestellten Verteiler mit dem in der Leckkammer 13 befindlichen elastischen Elementen verbunden ist, auch separate pneumatische Leitungen für jeweils eines der elastischen Elemente vorgesehen sein können.

Der Druckminderer 25 regelt den Druck auf einen Wert ein, der wenige 1/10 bar höher ist als der hydraulische Druck, unter dem das hydraulische Stützmedium in der Leckkammer 13, die einen in der Zeichnung nicht dargestellten Ablauf aufweist, ansteht. Typischerweise beträgt der pneumatische Druck in der Pneumatikleitung 24 ca. 0,3 bar, der hydraulische Druck in der Leckkammer 13 0,1 bar.

Die mit der Druckkammer 12 in Verbindung stehenden elastischen Elemente 18' sind über eine Sammelleitung 27 oder - alternativ - über Einzelleitungen mit einem Druck/Elektro-Wandler 28 verbunden, der den im Innenvolumen 21 der elastischen Elemente herrschenden, pneumatischen Druck in ein elektrisches Signal umwandelt. Letzteres wird über eine Elektroleitung 29 einem Eingang 30 einer als ganzes mit 31 bezeichneten Regeleinheit zugeleitet. Des weiteren wird dem Eingang 30 das von dem Druck/Elektro-Wandler 23 erzeugte elektrische Signal, das ein Maß für die Höhe des hydraulischen Druckes der Stützflüssigkeit ist, über eine Elektroleitung 32 zugeleitet.

Die Regeleinheit 31 vergleicht die beiden Eingangssignale und produziert an ihrem Ausgang 33 ein von der Differenz der Eingangssignale abhängiges Ausgangssignal, das über eine Elektroleitung 34 dem Betätigungselement 35 eines Pneumatik-Druckreglers 36 zugeleitet wird.

Der Druckregler 36 regelt in Abhängigkeit des elektrischen Signals den von der äußeren Druckluftquelle 26 anstehenden pneumatischen Druck, der typischerweise 6 bar beträgt, auf einen Wert zwischen 0 und 5 bar, der an einer mit ihm verbundenen Pneumatikleitung 37 ansteht. Da in der Druckkammer 12 auch Drücke von mehr als 5 bar, teils bis zu 10 bar anstehen können, ist die Pneumatikleitung 37 mit dem Eingang eines Druckdopplers 38 verbunden. Dessen Ausgang, an dem der doppelte Druck, der in der Pneumatikleitung 37 herrscht, ansteht, ist mit einer Pneumatikleitung 39 verbunden, die ihrerseits an der Stelle 40 in die Sammelleitung 27 mündet.

Die Regeleinheit 31 ist über eine Datenleitung 41 mit einer Überwachungseinheit 42 verbunden, die den jeweiligen Betriebszustand der Regeleinheit 31 analysiert und anzeigt und über eine über ein Modem 43 angeschlossene Bedieneinheit 44 fernbetätigbar ist.

### Bezugszeichenliste

- 1: Gegenwalze
- 2: Walzenspalt
- 3: Träger
- 4: Walzenmantel
- 5: Mantelfläche
- 6: Arbeitsumfang
- 7: Mantelfläche
- 8: Mantelfläche
- 9: Ringspalt
- 10: Längsdichtungsanordnung
- 11: Längsdichtungsanordnung
- 12: Druckkammer
- 13: Leckkammer
- 14: Längsnut
- 15: Längsnut
- 16: Längsnut
- 17: Längsnut
- 18: Elastisches Element
- 19: Außenhülle
- 20: Abstützmittel
- 21: Innenvolumen
- 22: Meßleitung
- 23: Druck/Elektro-Wandler
- 24: Pneumatikleitung
- 25: Druckminderer
- 26: Druckluftquelle
- 27: Sammelleitung
- 28: Druck/Elektro-Wandler
- 29: Elektroleitung
- 30: Eingang
- 31: Regeleinheit
- 32: Elektroleitung
- 33: Ausgang
- 34: Elektroleitung
- 35: Betätigungselement
- 36: Druckregler
- 37: Pneumatikleitung
- 38: Druckdoppler
- 39: Pneumatikleitung
- 40: Stelle
- 41: Datenleitung
- 42: Überwachungseinheit
- 43: Modem
- 44: Bedieneinheit
- 100: Walze

## Patentansprüche

1. Walze (100) für die Druckbehandlung von Warenbahnen,
mit einem Träger (3),
mit einem um den Träger (3) gelagerten Walzenmantel (4),
mit zumindest einer Druckkammer (12) zwischen dem Träger (3) und dem Walzenmantel (4), die zumindest teilweise mit einer Stützflüssigkeit gefüllt ist, die zumindest mittelbar eine hydraulische Stützkraft von dem Träger (3) auf den Walzenmantel (4) übertragen kann,
**dadurch gekennzeichnet,**
**daß** in der zumindest einen Druckkammer (12) ein elastisches Element (18') vorgesehen ist, das drosselfrei mit der Flüssigkeit in Verbindung steht und das bei Überschreitung des zur Erzeugung der hydraulischen Stützkraft erforderlichen Flüssigkeitsdrucks komprimierbar ist.

2. Walze nach Anspruch 1, **dadurch gekennzeichnet, daß** die Walze mindestens eine Leckkammer (13) zur Aufnahme aus der Druckkammer (12) austretender Stützflüssigkeit umfaßt.

3. Walze nach Anspruch 2, **dadurch gekennzeichnet, daß** zumindest ein elastisches Element (18) in der mindestens eine Leckkammer (13) vorgesehen ist.

4. Walze nach einem der Ansprüche 1 bis 3, **dadurch gekennzeichnet, daß** das mindestens eine elastische Element (18, 18') eine mit einem komprimierbaren Medium versehene oder versehbare Hohlkammer umfaßt.

5. Walze nach Anspruch 4, **dadurch gekennzeichnet, daß** das mindestens eine elastische Element (18, 18') schlauchförmig ausgebildet ist.

6. Walze nach Anspruch 4 oder 5, **dadurch gekennzeichnet, daß** das komprimierbare Medium Luft ist.

7. Walze nach Anspruch 6, **dadurch gekennzeichnet, daß** das elastische Element (18, 18') geschlossen und mit einem vorbestimmten Druck gefüllt ist.

8. Walze nach Anspruch 7, **dadurch gekennzeichnet, daß** das elastische Element (18, 18') mit Luft unter Atmosphärendruck beaufschlagt ist.

9. Walze nach Anspruch 7, **dadurch gekennzeichnet, daß** das elastische Element (18, 18') ein Einwegventil umfaßt, über das es mit Luft unter einem Druck füllbar ist, der niedriger als der Druck ist, unter dem die hydraulische Stützflüssigkeit während des Betriebs steht.

10. Walze nach Anspruch 6, **dadurch gekennzeichnet, daß** das mindestens eine elastische Element (18, 18') mit einer Druckluftquelle (26) verbunden ist, über die der Druck so nachfahrbar ist, daß er stets geringfügig höher als der Druck ist, unter dem die hydraulische Stützflüssigkeit steht.

11. Walze nach einem der Ansprüche 5 bis 10, **dadurch gekennzeichnet, daß** die schlauchförmig ausgebildeten elastischen Elemente (18, 18') Mittel zur inneren Abstützung (20) umfassen.

12. Walze nach Anspruch 11, **dadurch gekennzeichnet, daß** die Mittel zur inneren Abstützung (20) eine Spiralwendel aus einem elastisch verformbaren Material umfassen.

13. Walze nach einem der Ansprüche 1 bis 12, **dadurch gekennzeichnet, daß** das mindestens eine elastische Element (18, 18') in einer in den Träger (3) eingearbeiteten Ausnehmung vorgesehen ist.

14. Walze nach Anspruch 13, **dadurch gekennzeichnet, daß** die Ausnehmung die Form einer achsparallel verlaufenden Längsnut (14, 15, 16, 17) aufweist.

15. Walze nach einem der Ansprüche 1 bis 14, **dadurch gekennzeichnet, daß** Mittel zur Ermittlung des hydraulischen Druckes, unter dem die Stützflüssigkeit steht, vorgesehen sind.

16. Walze nach Anspruch 15, **dadurch gekennzeichnet, daß** die Walze derart ausgestaltet ist, daß die Mittel zur Ermittlung des hydraulischen Druckes zur Steuerung oder Regelung des pneumatischen Druckes, mit dem das mindestens eine elastische Element (18, 18') beaufschlagt wird, dienen.

## Claims

1. Roll (100) for pressure treatment of material bands,
with a carrier (3),
with a roll shell (4) mounted around the carrier (3),
with at least one pressure chamber (12) between the carrier (3) and the roll shell (4), which chamber is filled at least partly with a supporting liquid which can transmit the hydraulic supporting force from the carrier (3) to the roll shell (4), at least indirectly,
**characterized**
**in that** in the at least one pressure chamber (12) there is provided an elastic element (18') which unrestrictedly communicates with the liquid and is compressible when the liquid pressure required for producing the hydraulic supporting force is exceeded.

2. Roll according to Claim 1, **characterized in that** the roll comprises at least one leakage chamber (13) for receiving supporting liquid leaving the pressure chamber (12).

3. Roll according to Claim 2, **characterized in that** at least one elastic element (18) is provided in the at least one leakage chamber (13).

4. Roll according to one of Claims 1 to 3, **characterized in that** the at least one elastic element (18, 18') comprises a hollow chamber which is, or can be, provided with a compressible medium.

5. Roll according to Claim 4, **characterized in that** the at least one elastic element (18, 18') is formed as a hose.

6. Roll according to Claim 4 or 5, **characterized in that** the compressible medium is air.

7. Roll according to Claim 6, **characterized in that** the elastic element (18, 18') is closed and filled with a predetermined pressure.

8. Roll according to Claim 7, **characterized in that** the elastic element (18, 18') is subjected to air under atmospheric pressure.

9. Roll according to Claim 7, **characterized in that** the elastic element (18, 18') comprises a one-way valve, by means of which it can be filled with air under a pressure that is lower than the pressure exerted on the hydraulic supporting liquid during operation.

10. Roll according to Claim 6, **characterized in that** the at least one elastic element (18, 18') is connected to a compressed air source (26), by means of which the pressure can be adjusted in such a way that it is always slightly higher than the pressure exerted on the hydraulic supporting liquid.

11. Roll according to one of Claims 5 to 10, **characterized in that** the elastic elements (18, 18') formed as hoses comprise means for internal support (20).

12. Roll according to Claim 11, **characterized in that** the means for internal support (20) comprise a spiral coil of an elastically deformable material.

13. Roll according to one of Claims 1 to 12, **characterized in that** the at least one elastic element (18, 18') is provided in a recess machined into the carrier (3).

14. Roll according to Claim 13, **characterized in that** the recess has the form of an axially parallel running longitudinal groove (14, 15, 16, 17).

15. Roll according to one of Claims 1 to 14, **characterized in that** means for determining the hydraulic pressure exerted on the supporting liquid are provided.

16. Roll according to Claim 15, **characterized in that** the roll is designed in such a way that the means for determining the hydraulic pressure serve for controlling or regulating the pneumatic pressure to which the at least one elastic element (18, 18') is subjected.

## Revendications

1. Cylindre (100) destiné au traitement de compression de bandes de matériau, avec un support (3), avec une enveloppe cylindrique (4) montée autour du support (3), avec au moins une chambre de pression (12) entre le support (3) et l'enveloppe cylindrique (4), qui est remplie au moins partiellement d'un liquide de soutien, qui peut transmettre une force de soutien du support (3) à l'enveloppe cylindrique (4), **caractérisé en ce qu'**il est prévu, dans ladite au moins une chambre de pression (12), un élément élastique (18'), qui est en communication sans étranglement avec le liquide et qui peut être comprimé en cas de dépassement de la pression de liquide nécessaire pour la production de la force de soutien hydraulique.

2. Cylindre selon la revendication 1, **caractérisé en ce que** le cylindre comprend au moins une chambre de fuite (13) destinée à recevoir le liquide de soutien s'échappant de la chambre de pression (12).

3. Cylindre selon la revendication 2, **caractérisé en ce qu'**il est prévu au moins un élément élastique (18) dans ladite au moins une chambre de fuite (13).

4. Cylindre selon l'une quelconque des revendications 1 à 3, **caractérisé en ce que** ledit au moins un élément élastique (18, 18') comprend une cavité remplie ou pouvant être remplie d'un fluide compressible.

5. Cylindre selon la revendication 4, **caractérisé en ce que** ledit au moins élément élastique (18, 18') se présente sous la forme d'un tuyau souple.

6. Cylindre selon la revendication 4 ou 5, **caractérisé en ce que** le fluide compressible est l'air.

7. Cylindre selon la revendication 6, **caractérisé en ce que** l'élément élastique (18, 18') est fermé et est rempli avec une pression prédéterminée.

8. Cylindre selon la revendication 7, **caractérisé en ce que** l'élément élastique (18, 18') est alimenté en air à la pression atmosphérique.

9. Cylindre selon la revendication 7, **caractérisé en ce que** l'élément élastique (18, 18') comporte une soupape à une voie, par laquelle il peut être rempli d'air sous une pression qui est inférieure à la pression à laquelle le liquide de soutien hydraulique se trouve pendant le fonctionnement.

10. Cylindre selon la revendication 6, **caractérisé en ce que** ledit au moins un élément élastique (18, 18') est raccordé à une source d'air comprimé (26), par laquelle la pression peut être suivie de telle manière qu'elle soit toujours légèrement supérieure à la pression à laquelle se trouve le liquide de soutien.

11. Cylindre selon l'une quelconque des revendications 5 à 10, **caractérisé en ce que** les éléments élastiques en forme de tuyaux souples (18, 18') comprennent des moyens de support interne (20).

12. Cylindre selon la revendication 11, **caractérisé en ce que** les moyens de support interne (20) comprennent une spirale hélicoïdale en un matériau élastiquement déformable.

13. Cylindre selon l'une quelconque des revendications 1 à 12, **caractérisé en ce que** ledit au moins un élément élastique (18, 18') est prévu dans un évidement usiné dans le support (3).

14. Cylindre selon la revendication 13, **caractérisé en ce que** l'évidement présente la forme d'une rainure longitudinale (14, 15, 16, 17) s'étendant parallèlement à l'axe.

15. Cylindre selon l'une quelconque des revendications 1 à 14, **caractérisé en ce qu'**il est prévu des moyens pour déterminer la pression hydraulique à laquelle se trouve le liquide de soutien.

16. Cylindre selon la revendication 15, **caractérisé en ce que** le cylindre est configuré de telle manière que les moyens pour déterminer la pression hydraulique servent pour la commande ou la régulation de la pression pneumatique, à laquelle ledit au moins un élément élastique (18, 18') est soumis.
